# FASCICULE DE BREVET EUROPEEN

(11) **EP 3 948 011 B1**
(45) Date de publication et mention de la délivrance du brevet: **19.04.2023**
(21) Numéro de dépôt: 20707733.0
(22) Date de dépôt: 10.02.2020
(51) Int. Cl.: F16F 9/18, F16F 9/49, F16F 9/512

(54) **AMORTISSEUR AVEC BUTÉE DE FIN DE COURSE AUTO-ADAPTABLE EQUIPÉE D'UN BOISSEAU FLOTTANT**
FLUIDDÄMPFER AUFWEISEND EINEN SELBSTANPASSENDEN ANSCHLAG MIT EINEM SCHWIMMENDEN SCHIEBER
FLUID DAMPER FEATURING A SELF-ADAPTING END STOP WITH A FLOATING SLIDER

(30) Priorité: 27.03.2019 FR 1903175
(43) Date de publication de la demande: 09.02.2022
(73) Titulaire: PSA Automobiles SA, 78300 Poissy (FR)
(72) Inventeur: BONTRON, Francis, 92190 MEUDON (FR); MONTEIL, Christophe, 91640 BRIIS SOUS FORGES (FR); ALLEGRE, Jean Marc, 91470 LIMOURS (FR); CAVAREC, Alan, 78350 LES LOGES EN JOSAS (FR); RIGUEL, Frederic, 92300 LEVALLOIS PERRET (FR)
(86) Numéro de dépôt international: PCT/FR2020/050226
(87) Numéro de publication internationale: WO 2020/193885

(56) Documents cités:
- DE-A1-102010 023 870
- FR-A1- 3 050 496
- US-A1- 2016 223 045

## Description

La présente invention concerne un amortisseur hydraulique disposant d'une butée de fin de course, ainsi qu'un véhicule automobile équipé de ce type d'amortisseur.

Les véhicules automobiles comportent généralement pour chaque roue une suspension comprenant un ressort de suspension, et un amortisseur télescopique hydraulique qui freine les mouvements de cette suspension. En particulier l'amortisseur peut comporter une butée hydraulique de fin de course, qui arrête le mouvement en bout de course pour éviter un choc sur une butée rigide.

Un type de butée hydraulique de fin de course réglable connu, présenté notamment par le document US-A-32077270, comporte une tige recevant une poussée axiale d'un mouvement à freiner, entraînant un piston coulissant dans un cylindre présentant une série de perçages répartis sur la longueur. Un système de commande manuelle disposé à l'extérieur du cylindre, permet de régler la fermeture de ces perçages afin d'ajuster le niveau de freinage de la butée.

Toutefois le réglage de ce type de butée ne comporte aucun automatisme permettant de s'adapter à différentes charges.

Un autre type de butée connu pour un amortisseur de suspension de véhicule, présenté notamment par le document FR-A1-3050000, comporte une tige de vérin comprenant à son extrémité inférieure un piston d'amortissement pour réaliser l'amortissement principal, se prolongeant vers le bas par une chemise qui en fin de course de compression vient s'ajuster autour d'un tube intérieur de butée.

La chemise comporte une série de perçages répartis axialement, qui sont fermés les uns après les autres lors de l'introduction du tube dans cette chemise afin de freiner de plus en plus fortement le transfert de fluide venant de la chambre extérieure formée autour de la chemise, vers la chambre en avant du piston à l'intérieur du tube. On obtient un freinage de plus en plus élevé de la fin de course de compression de l'amortisseur.

Un ressort de poussée disposé en dessous du piston principal, vient un peu avant la fin de course de l'amortisseur presser sur un boisseau coulissant axialement dans le tube de butée qui comporte des perçages additionnels à différentes hauteurs.

Une chambre de contrôle disposée dans le tube de butée en dessous du boisseau, comporte un passage limité de fluide vers l'extérieur afin de freiner le mouvement de descente de ce boisseau sous l'effet du ressort de poussée, et le mouvement de remontée de ce boisseau sous l'effet d'un ressort de rappel.

De cette manière un appui rapide du ressort de poussée sur le boisseau, lors d'un débattement important de la suspension réalisé de manière occasionnelle pour un véhicule peu chargé, ne descend pas le boisseau freiné par le fluide de la chambre de contrôle, présentant une dynamique lente. Les perçages du tube de butée restent ouverts, donnant une grande souplesse à la butée de fin de course ce qui apporte un confort élevé.

Un appui fréquent du ressort de poussée sur le boisseau avec un véhicule chargé, finit par descendre le boisseau qui ferme des perçages du tube de butée en durcissant plus fortement la butée de fin de course. On obtient une sécurité en évitant un talonnement de la suspension pour ce véhicule chargé. Toutefois ce type de butée comprenant un boisseau réglable intérieur au tube de butée, ne convient pas pour une butée hydraulique de fin de course comportant un piston venant à l'intérieur du tube de butée présentant des perçages répartis sur sa longueur.

Le document DE102010023870A1 divulgue un amortisseur hydraulique ayant un boisseau coulissant axialement autour du tube intérieur, formant un flotteur se déplaçant suivant le niveau de fluide dans la chambre de compensation.

Le document US2016223045A1 divulgue un amortisseur hydraulique selon le préambule de la revendication 1.

La présente invention a notamment pour but d'éviter ces inconvénients de la technique antérieure.

Elle propose à cet effet un amortisseur hydraulique comportant un piston d'amortisseur coulissant dans un tube intérieur, se déplaçant lors d'une compression dans une direction axiale appelée avant, une chambre de compensation entourant le tube intérieur et recevant le fluide déplacé par l'entrée d'une tige principale dans l'amortisseur, le piston d'amortisseur supportant vers l'avant une tige de butée de fin de course comprenant à son extrémité un piston de butée rentrant dans un tube de butée présentant des perçages de sortie de fluide, cet amortisseur étant remarquable en ce que la chambre de compensation comporte un boisseau coulissant axialement autour du tube intérieur avec un système de freinage, formant un flotteur se déplaçant suivant le niveau de fluide dans cette chambre de compensation, qui agit suivant son déplacement sur des perçages réglables du tube de butée. Un avantage de cet amortisseur est que pour un amortisseur dans une position proche de la verticale, le niveau de fluide dans la chambre de compensation forme un indicateur de la charge moyenne du véhicule. Avec un coulissement freiné du boisseau pour obtenir une adaptation de sa hauteur à ce niveau moyen de fluide indépendant des variations rapides des mouvements de l'amortisseur, on peut dans le cas d'un véhicule peu chargé avec une assiette haute et le niveau de fluide bas, descendre le boisseau en fermant les perçages réglables.

On obtient dans ce cas une loi de freinage sur une grande course de la butée, assurant le confort pour ce véhicule peu chargé. Les fonctionnements rapides de la butée ne déplacent pas le boisseau à cause de sa dynamique lente. Dans le cas d'un véhicule fortement chargé le niveau de fluide est plus haut, le boisseau finit par monter ce qui ouvre les perçages réglables.

On obtient avec ces perçages ouverts un freinage faible de la butée pour le début de sa course, assurant le confort pour le véhicule avec une assiette basse, et un freinage important une fois ces perçages réglables dépassés pour éviter une arrivée brutale en fin de course.

L'amortisseur hydraulique selon l'invention peut comporter de plus une ou plusieurs des caractéristiques suivantes, qui peuvent être combinées entre elles.

Avantageusement, le boisseau comporte des aimants agissant sur les perçages réglables.

Dans ce cas, les perçages réglables peuvent comporter des clapets comprenant un aimant ou un matériau magnétique, les aimants du boisseau agissant sur ces clapets quand ils sont en face.

Avantageusement, chaque perçage réglable comporte un ressort de rappel qui tend à fermer ce perçage.

Dans ce cas, avantageusement les ressorts de rappel prennent appui sur la face interne du tube intérieur, pour pousser des clapets venant sur le tube de butée afin de fermer les perçages réglables.

Avantageusement, le boisseau comporte une chambre de temporisation séparée en deux volumes par un élément fixe, permettant un débit de fuite autour de cet élément fixe.

Dans ce cas, avantageusement la chambre de temporisation forme un volume annulaire en contact avec la surface externe du tube intérieur.

De plus, avantageusement l'élément fixe forme un segment annulaire engagé dans une rainure externe du tube intérieur.

L'invention a aussi pour objet un véhicule automobile équipé d'amortisseurs hydrauliques de suspension comprenant l'une quelconque des caractéristiques précédentes.

Avantageusement, ce véhicule comportant au repos une charge dépassant un seuil de charge, le niveau du fluide dans la chambre de compensation dispose le boisseau dans sa position arrière.

L'invention sera mieux comprise et d'autres caractéristiques et avantages apparaîtront plus clairement à la lecture de la description ci-après donnée à titre d'exemple, en référence aux dessins annexés dans lesquels :
[Fig. 1] présente en coupe axiale la partie avant d'un amortisseur selon l'invention au repos, le véhicule étant à vide ; et
[Fig. 2] présente l'amortisseur au repos le véhicule étant chargé.

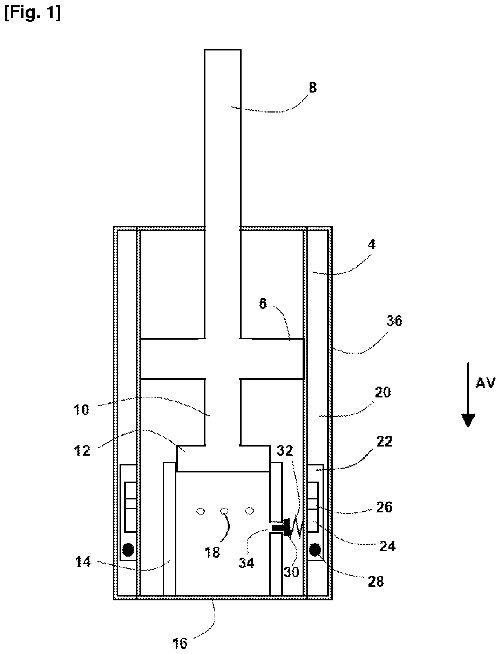

La figure 1 présente un amortisseur télescopique comportant du côté avant indiqué par la flèche AV, un tube intérieur 4 disposé dans un corps extérieur 36, contenant un piston d'amortisseur 6 fixé sur une tige d'entrée 8, séparant deux chambres hydrauliques pour réaliser l'amortissement principal du mouvement de la suspension. Le volume entre le corps extérieur 36 et le tube intérieur 4 forme une chambre de compensation 20 contenant un gaz sous pression, qui reçoit le trop-plein de fluide venant du volume déplacé par l'entrée de la tige d'entrée 8 dans l'amortisseur lors de sa compression.

La tige d'entrée 8 comporte une tige de prolongation 10 en avant du piston d'amortisseur 6, comprenant à son extrémité avant un piston de butée 12 équipé sur son pourtour d'un joint d'étanchéité donnant un léger débit de fuite, qui rentre vers la fin de course de l'amortisseur dans un tube de butée 14 comprenant un fond d'extrémité avant 16 lié au tube intérieur 4 et au corps extérieur 36.

Le tube de butée 14 peut comporter en particulier des fentes longitudinales partant de son extrémité arrière, couvrant près de la moitié de sa longueur, présentant une grande largeur à l'extrémité arrière qui se réduit progressivement vers l'avant. Le tube de butée 14 peut comporter de plus des séries de perçages du tube 18 disposées chacune dans un plan transversal, pour réaliser des lois de freinage adaptées à la position du piston de butée 12. Un boisseau 22 disposé dans la chambre de compensation 20, est ajusté autour du tube intérieur 4 pour permettre son coulissement axial le long de ce tube, en permettant le passage du fluide autour.

Le boisseau 22 comporte une chambre annulaire de temporisation 24 disposée face au tube intérieur 4, comprenant un segment 26 engagé dans une gorge externe de ce tube intérieur pour être maintenu, de manière à séparer axialement cette chambre en deux volumes avec un petit débit de fuite entre ces volumes.

Le coulissement axial du boisseau 22 est freiné par le transfert du fluide entre les deux volumes de la chambre de temporisation 24, ce qui lui donne une dynamique lente de déplacement.

Le boisseau 22 forme un flotteur présentant une densité inférieure à celle du fluide, de manière à suivre le déplacement du niveau de fluide dans la chambre de compensation 20, avec une temporisation.

Pour un véhicule peu chargé présentant une assiette haute, la tige d'entrée 8 est en grande partie sortie de l'amortisseur ce qui donne un niveau faible du fluide dans la chambre de compensation 20. Le boisseau 22 est dans une position avant. Quand le véhicule se charge au-dessus d'un seuil de charge, en prenant par exemple des personnes ou des bagages, la tige d'entrée 8 renvoie du fluide dans la chambre de compensation 20, le boisseau 22 monte dans une position haute.

En particulier le boisseau 22 conserve sensiblement sa position du véhicule au repos lors des oscillations de la suspension pendant le roulage, présentant une fréquence de l'ordre d'un Hertz, la dynamique lente de transfert du fluide dans la chambre de temporisation 24 le freine suffisamment. Le boisseau 22 finit par se déplacer lors d'une différence de charge du véhicule modifiant son assiette.

Le tube de butée 14 présente des perçages 34 comportant chacun un clapet 30 disposant d'un ressort 32 prenant appui sur le tube intérieur 4, pour presser ce clapet radialement vers l'intérieur sur la surface extérieure du tube de butée en fermant ce perçage. Le clapet 30 comporte un matériau magnétique ou un aimant.

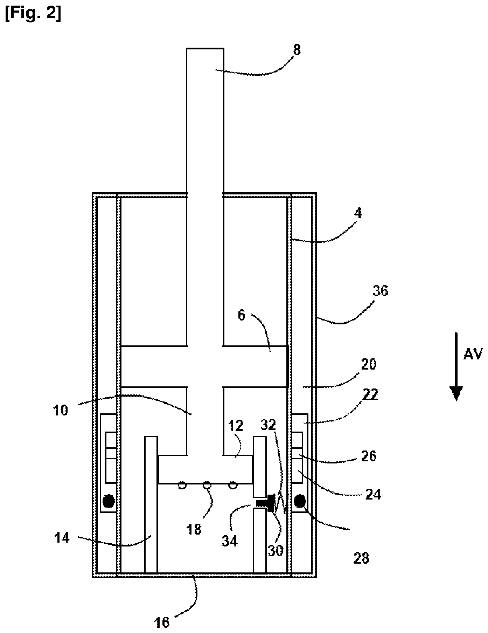

La base du boisseau 22 comporte des aimants 28 répartis sur son contour, qui dans la position arrière de ce boisseau présentée figure 2, viennent chacun en face d'un clapet 30 de manière à attirer ce clapet en comprimant son ressort de rappel 32 pour le maintenir ouvert.

La figure 1 présente le véhicule à vide avec une assiette haute, le boisseau 30 est dans sa position avant, les clapets 30 sont fermés. L'amortisseur au début de sa fin de course présentée sur cette figure, le piston de butée 12 commence à entrer dans le tube de butée 14. On a alors un freinage progressif de l'amortisseur sur toute la course de sa butée, utilisant les perçages 18 répartis sur sa longueur.

On obtient une limitation des mouvements de caisse donnant un niveau de confort élevé, avec un freinage progressif sur la course complète de la butée de fin de course.

La figure 2 présente le véhicule chargé au repos, la tige d'entrée 8 a refoulé du fluide dans la chambre de compensation 20. Après un transfert de fluide entre les volumes de la chambre de temporisation 24, le boisseau 22 est venu dans sa position arrière, ses aimants 28 attirant les clapets 30 qui sont ouverts. Lors du roulage du véhicule avec des petites oscillations de la suspension, le piston de butée 12 entre dans le tube de butée 14 en restant au-dessus des perçages réglables 34 qui sont ouverts, ces oscillations ne sont pas freinées ce qui assure le confort.

Pour les oscillations plus importantes de la suspension, notamment les chocs sur la suspension, la course du piston de butée 12 se prolonge en dessous des perçages réglables 34. On a alors un freinage important de la butée de fin de course sur la course restante.

On obtient alors pour le véhicule en charge avec une assiette plus basse, à la fois un amortissement normal pour les petites oscillations et un freinage important sur la course restante pour les grandes oscillations, ce qui assure le confort et la tenue de route.

Après un déchargement du véhicule remontant son assiette, le boisseau 22 descend avec une dynamique lente lors de la baisse du fluide dans la chambre de compensation 20, pour revenir dans la position d'origine présentée figure 1.

On obtient de manière simple et efficace, sans liaison avec l'extérieur ni système électrique, un réglage passif auto-adaptatif de la butée de fin de course. On notera que la butée de fin de course comporte des composants en nombre réduit, ce qui lui donne un coût modéré.

En particulier avec le véhicule au repos, pour une charge de personnes ou de bagages dépassant un seuil de charge, l'assiette du véhicule descend et le boisseau 22 se met avec la temporisation dans sa position arrière donnant le réglage adapté de la butée de fin de course.

## Revendications

1. Amortisseur hydraulique comportant un piston d'amortisseur (6) fixé à une tige principale (8), coulissant dans un tube intérieur (4), se déplaçant lors d'une compression dans une direction axiale appelée avant (AV), et une chambre de compensation (20) entourant le tube intérieur (4), recevant le fluide déplacé par l'entrée de la tige principale (8) dans l'amortisseur, le piston d'amortisseur (6) supportant vers l'avant une tige de butée de fin de course (10) comprenant à son extrémité un piston de butée (12) rentrant dans un tube de butée (14) présentant des perçages de sortie de fluide (18, 34), **caractérisé en ce que** la chambre de compensation (20) comporte un boisseau (22) coulissant axialement autour du tube intérieur (4) avec un système de freinage, formant un flotteur se déplaçant suivant le niveau de fluide dans cette chambre de compensation (20), qui agit suivant son déplacement sur des perçages réglables (34) du tube de butée (14).

2. Amortisseur selon la revendication 1, **caractérisé en ce que** le boisseau (22) comporte des aimants (28) agissant sur les perçages réglables (34).

3. Amortisseur selon la revendication 2, **caractérisé en ce que** les perçages réglables (34) comportent des clapets (30) comprenant un aimant ou un matériau magnétique, les aimants (28) du boisseau (22) agissant sur ces clapets (30) quand ils sont en face.

4. Amortisseur selon l'une quelconque des revendications précédentes, **caractérisé en ce que** chaque perçage réglable (34) comporte un ressort de rappel (32) qui tend à fermer ce perçage (34).

5. Amortisseur selon la revendication 4, **caractérisé en ce que** les ressorts de rappel (32) prennent appui sur la face interne du tube intérieur (4), pour pousser des clapets (30) venant sur le tube de butée (14) afin de fermer les perçages réglables (34).

6. Amortisseur selon l'une quelconque des revendications précédentes, **caractérisé en ce que** le boisseau (22) comporte une chambre de temporisation (24) séparée en deux volumes par un élément fixe (26), permettant un débit de fuite autour de cet élément fixe (26).

7. Amortisseur selon la revendication 6, **caractérisé en ce que** la chambre de temporisation (24) forme un volume annulaire en contact avec la surface externe du tube intérieur (4).

8. Amortisseur selon la revendication 7, **caractérisé en ce que** l'élément fixe (26) forme un segment annulaire engagé dans une rainure externe du tube intérieur (4).

9. Véhicule automobile équipé d'amortisseurs hydrauliques de suspension, **caractérisé en ce qu'**il comporte des amortisseurs selon l'une quelconque des revendications précédentes.

10. Véhicule automobile selon la revendication 9, **caractérisé en ce que** ce véhicule comportant au repos une charge dépassant un seuil de charge, le niveau du fluide dans la chambre de compensation (20) dispose le boisseau (22) dans sa position arrière.

## Patentansprüche

1. Hydraulischer Stoßdämpfer mit einem an einer Hauptstange (8) befestigten, in einem inneren Rohr (4) gleitenden, bei Kompression in einer als vorne (AV) bezeichneten axialen Richtung verschiebbaren Stoßdämpferkolben (6) und einer das innere Rohr (4) umgebenden Ausgleichskammer (20), die das durch den Eintritt der Hauptstange (8) in den Stoßdämpfer verdrängte Fluid aufnimmt, wobei der Stoßdämpferkolben (6) nach vorne eine Endanschlagstange (10) trägt, die an ihrem Ende einen Anschlagkolben (12) aufweist, der in ein Anschlagrohr (14) mit Bohrungen eingreift Fluidauslass (18, 34), **dadurch gekennzeichnet, dass** die Ausgleichskammer (20) einen axial um das Innenrohr (4) verschiebbaren Vorsprung (22) mit einer Bremsanlage aufweist, die einen sich in dieser Ausgleichskammer (20) in Fluidhöhe bewegenden Schwimmer bildet, der in seiner Bewegung auf verstellbare Bohrungen (34) des Anschlagrohres (14) einwirkt.

2. Stoßdämpfer nach Anspruch 1, **dadurch gekennzeichnet, dass** die Hülse (22) auf die verstellbaren Bohrungen (34) einwirkende Magnete (28) aufweist.

3. Stoßdämpfer nach Anspruch 2, **dadurch gekennzeichnet, dass** die verstellbaren Bohrungen (34) Klappen (30) aufweisen, die einen Magneten oder ein magnetisches Material umfassen, wobei die Magnete (28) des Gehäuses (22) auf diese Klappen (30) einwirken, wenn sie sich gegenüber befinden.

4. Stoßdämpfer nach einem der vorhergehenden Ansprüche, **dadurch gekennzeichnet, dass** jede verstellbare Bohrung (34) eine Rückstellfeder (32) aufweist, die dazu neigt, diese Bohrung (34) zu verschließen.

5. Stoßdämpfer nach Anspruch 4, **dadurch gekennzeichnet, dass** sich die Rückstellfedern (32) an der Innenseite des Innenrohres (4) abstützen, um zum Schließen der verstellbaren Bohrungen (34) auf das Anschlagrohr (14) auftretende Klappen (30) zu drücken.

6. Stoßdämpfer nach einem der vorhergehenden Ansprüche, **dadurch gekennzeichnet, dass** das Gehäuse (22) eine Verzögerungskammer (24) aufweist, die durch ein feststehendes Element (26) in zwei Volumina getrennt ist, wodurch ein Leckstrom um dieses feststehende Element (26) herum ermöglicht wird.

7. Stoßdämpfer nach Anspruch 6, **dadurch gekennzeichnet, dass** die Verzögerungskammer (24) ein ringförmiges Volumen in Kontakt mit der Außenfläche des Innenrohres (4) bildet.

8. Stoßdämpfer nach Anspruch 7, **dadurch gekennzeichnet, dass** das feststehende Element (26) ein ringförmiges Segment bildet, das in eine äußere Nut des Innenrohres (4) eingreift.

9. Kraftfahrzeug mit hydraulischen Stoßdämpfern für die Aufhängung, **dadurch gekennzeichnet, dass** es Stoßdämpfer nach einem der vorhergehenden Ansprüche aufweist.

10. Kraftfahrzeug nach Anspruch 9, **dadurch gekennzeichnet, dass** das Fahrzeug im Ruhezustand eine eine Belastungsschwelle überschreitende Last aufweist, wobei der Fluidstand in der Ausgleichskammer (20) den Scheffel (22) in seiner hinteren Stellung anordnet.

## Claims

1. Hydraulic damper comprising a damper piston (6) fixed to a main rod (8), sliding in an inner tube (4), moving during compression in an axial direction called the front (AV), and a compensation chamber (20) surrounding the inner tube (4), receiving the fluid displaced by the inlet of the main rod (8) in the damper, the damper piston (6) supporting towards the front an end stop rod (10) comprising at its end a stop piston (12) entering a stop tube (14) having outlet bores fluid chamber (18, 34), **characterized in that** the compensation chamber (20) comprises a plug (22) sliding axially around the inner tube (4) with a braking system, forming a float moving according to the level of fluid in this compensation chamber (20), which acts according to its displacement on adjustable bores (34) of the stop tube (14).

2. Shock absorber according to Claim 1, **characterized in that** the plug (22) comprises magnets (28) acting on the adjustable holes (34).

3. A damper according to claim 2, **characterized in that** the adjustable holes (34) comprise valves (30) comprising a magnet or a magnetic material, the magnets (28) of the plug (22) acting on these valves (30) when they face each other.

4. Shock absorber according to any one of the preceding claims, **characterized in that** each adjustable bore (34) comprises a return spring (32) which tends to close this bore (34).

5. Shock absorber according to Claim 4, **characterized in that** the return springs (32) bear on the internal face of the inner tube (4), in order to push flaps (30) coming onto the stop tube (14) in order to close the adjustable holes (34).

6. Shock absorber according to any one of the preceding claims, **characterized in that** the plug (22) comprises a delay chamber (24) separated into two volumes by a fixed element (26), allowing a leakage flow rate around this fixed element (26).

7. Shock absorber according to Claim 6, **characterized in that** the delay chamber (24) forms an annular volume in contact with the outer surface of the inner tube (4).

8. Shock absorber according to Claim 7, **characterized in that** the fixed element (26) forms an annular segment engaged in an external groove of the inner tube (4).

9. Motor vehicle equipped with hydraulic suspension dampers, **characterized in that** it comprises dampers according to any one of the preceding claims.

10. Motor vehicle according to claim 9, **characterized in that** this vehicle comprises at rest a load exceeding a load threshold, the level of the fluid in the compensation chamber (20) disposes the plug (22) in its rear position.
